# EUROPÄISCHE PATENTSCHRIFT

(11) **EP 2 622 719 B1**
(45) Veröffentlichungstag und Bekanntmachung des Hinweises auf die Patenterteilung: **20.08.2014**
(21) Anmeldenummer: 11771019.4
(22) Anmeldetag: 30.09.2011
(51) Int. Cl.: B25F 5/02, H02K 7/116, H02K 5/04

(54) **VERBINDUNGSSTRUKTUR ZUR MECHANISCHEN VERBINDUNG EINES ERSTEN GEHÄUSES MIT EINEM ZWEITEN GEHÄUSE**
CONNECTING STRUCTURE FOR MECHANICALLY CONNECTING A FIRST HOUSING TO A SECOND HOUSING
STRUCTURE DE LIAISON POUR LIER MÉCANIQUEMENT UN PREMIER BOÎTIER ET UN DEUXIÈME BOÎTIER

(30) Priorität: 30.09.2010 DE 102010047008
(43) Veröffentlichungstag der Anmeldung: 07.08.2013
(73) Patentinhaber: IMS Gear GmbH, 78166 Donaueschingen (DE)
(72) Erfinder: BEA, Dominik, 78052 Villingen-Schwenningen (DE)
(74) Vertreter: Göhring, Robert
(86) Internationale Anmeldenummer: PCT/EP2011/004889
(87) Internationale Veröffentlichungsnummer: WO 2012/041511

(56) Entgegenhaltungen:
- DE-A1-102005 030 217
- GB-A- 677 903
- US-A1- 2003 213 087

## Beschreibung

Die Erfindung betrifft eine Verbindungsstruktur zur mechanischen Verbindung eines ersten Gehäuses mit einem zweiten Gehäuse gemäß Oberbegriff des Patentanspruchs 1.

Eine solche Verbindungsstruktur aus einem Motorgehäuse für einen Elektromotor und einem Getriebegehäuse ist z.B. aus US 2003/213087 A bekannt.

Eine andere Verbindungsstruktur beschreibt die DE 203 04 904 U1 bekannt. Das Motorgehäuse ist als Metalltopf ausgeformt, der in eine auf einer Stirnseite des Getriebegehäuses ausgebildete hohlzylindrische Aufnahme eingesteckt wird. Die offene Stirnseite des den Elektromotor aufnehmenden Metalltopfes wird von einem Flansch verschlossen, so dass der Metalltopf zwischen diesem Flansch und dem Getriebegehäuse über randseitig angeordnete Kragen mittels Schrauben verspannt werden kann. Um die erforderliche Abdichtung des Motorinnenraums zu erreichen, werden bei dieser bekannten Verbindungsstruktur verliersichere Dichtungen an den Gehäuseteilen angeformt. Diese bekannte Motor-Getriebe-Einheit weist den Nachteil auf, dass die zugehörige Verbindungsstruktur nur mit topfförmigen Motorgehäusen, die also spezifisch ausgebildet sind, realisiert werden kann. Außerdem sind zur Realisierung der angeformten Dichtungen die Gehäuseteile aufwendig und damit nur mit hohen Kosten herstellbar. Schließlich ist die Montage einer solchen Motor-Getriebe-Einheit gemäß der DE 203 04 904 U1 aufwendig, wodurch sich die Herstellkosten weiter erhöhen. Diesem bekannten Konzept gemäß dieser DE 203 04 904 U1 mangelt es daher an Flexibilität hinsichtlich der einsetzbaren Motorgehäuse, insbesondere von Großserienmotoren mit geschlossenem Gehäuse, die aus Preisgründen oft ohne Gewindebohrung hergestellt werden, so dass eine Schraubbefestigung an Motorflanschen nicht möglich ist.

Weitere Verbindungsstrukturen offenbart die GB 677 903 A und die DE 10 2005 030 217 A1.

Die Aufgabe der Erfindung ist es daher, eine verbesserte Verbindungsstruktur der eingangs genannten Art derart bereitzustellen, dass ohne hohen konstruktiven Aufwand zwei Gehäuse, insbesondere ein Motorgehäuse und ein Getriebegehäuse miteinander verbunden werden können.

Diese Aufgabe wird gelöst durch eine Verbindungsstruktur mit den Merkmalen des Patentanspruchs 1.

Ein solche Verbindungsstruktur zur mechanischen Verbindung eines ersten Gehäuses mit einem zweiten Gehäuse, bei der eine Stirnseite des zweiten Gehäuse eine hohlzylindrische Aufnahme zum Einstecken des ersten Gehäuses aufweist, zeichnet sich dadurch aus, dass die hohlzylindrische Aufnahme von einem ringförmigen Kragen gebildet wird, und dass zur Bildung eines Kraftschlusses des ersten Gehäuses mit dem zweiten Gehäuse der Kragen wenigstens einen Gewindestift als Spannelement aufweist, der in radialer Richtung hinsichtlich des Kragens mit dem ersten Gehäuse in Wirkverbindung steht.

Der Gewindestift wird in einfacher Weise in eine Gewindebohrung in dem ringförmigen Kragen eingeschraubt und gegen das erste Gehäuse, also vorzugsweise das Motorgehäuse verspannt. Dabei ist es erfindungsgemäß vorgesehen, dass das erste Gehäuse im Bereich des Kragens eine radial angeordnete Eingriffsnut für den Gewindestift aufweist. Dadurch wird neben einer besseren gegenseitigen Fixierung der beiden Gehäuse auch die Montagequalität verbessert, insbesondere eine fehlerfreie Montage sichergestellt.

Damit es möglich, zylinderförmige Gehäuse, insbesondere Motorgehäuse mit einem weiteren Gehäuse, insbesondere Getriebegehäuse in einfacher Weise zu verbinden, wobei insbesondere die Montage wesentlich vereinfacht wird, da nach dem Einstecken des ersten Gehäuses, bspw. des Motorgehäuses in die als ringförmiger Kragen ausgebildete Aufnahme des zweiten Gehäuses, also bspw. des Getriebegehäuses nur noch das Spannelement zur radialen und axialen Sicherung der Verbindung der beiden Gehäuse montiert zu werden braucht.

Gemäß einer weiteren vorteilhaften Weiterbildung der Erfindung weist das erste Gehäuse, bspw. ein Motorgehäuse einen zylinderförmigen Flansch auf, der die Abtriebswelle bspw. eines Elektromotors lagert, wobei dieser Flansch von einer auf der einen Stirnseite des zweiten Gehäuses, insbesondere eines Getriebegehäuses angeordneten Sackbohrung aufgenommen wird. Damit verbessert sich die Zentrierung des ersten Gehäuses hinsichtlich des zweiten Gehäuses, insbesondere im Falle eines Motorgehäuses wird damit eine exakte Ausrichtung des Elektromotors hinsichtlich eines mit ihm verbundenen Getriebegehäuses erleichtert.

Bei einer erfindungsgemäßen Ausgestaltung der Erfindung wird das als Getriebegehäuse ausgebildete erste Gehäuse modulartig aufgebaut, wobei die eine Stirnseite mit dem ringförmigen Kragen und der Zentrieröffnung als Motorflansch ausgebildet ist. Mit einem solchen Motorflansch können unterschiedliche Getriebevarianten einer Motor-Getriebe-Einheit mit der erfindungsgemäßen Verbindungsstruktur realisiert werden.

Eine verbesserte Anbindung eines Motorgehäuses an ein Getriebegehäuse wird gemäß einer weiteren Ausgestaltung der Erfindung dadurch erreicht, dass der Motorflansch eine kugelgelagerte Antriebswelle aufweist, die mit einer von dem zylinderförmigen Flansch des Motorgehäuses geführten Abtriebswelle in Wirkverbindung steht.

In vorteilhafter Weise kann das Getriebegehäuse ein Planetengetriebe umfassen, wobei vorzugsweise das Getriebegehäuse wenigstens eine Getriebestufe mit einem Hohlrad, einem Sonnenrad und einem die Planetenräder tragenden Planetenträger umfasst, wobei die andere Stirnseite des Getriebegehäuses von einem Abtriebsflansch gebildet wird.

Die Erfindung wird nachfolgend anhand eines Ausführungsbeispiels unter Bezugnahme auf die beigefügten Figuren ausführlich beschrieben. Es zeigen:
- Figur 1: eine perspektivische Darstellung einer Motor-Getriebe-Einheit (teilweise als Phantomzeichnung) mit einer erfindungsgemäßen Verbindungsstruktur als Ausführungsform der Erfindung,
- Figur 2: eine perspektivische Darstellung des Getriebegehäuses nach Figur 1, und
- Figur 3: einen axialen Längsschnitt der Motor-Getriebe-Einheit nach Figur 1.

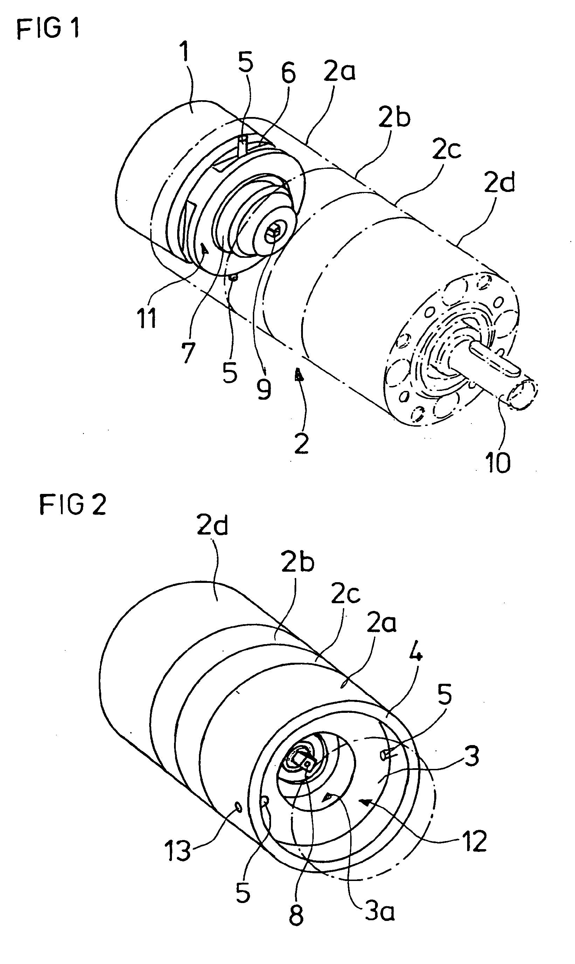

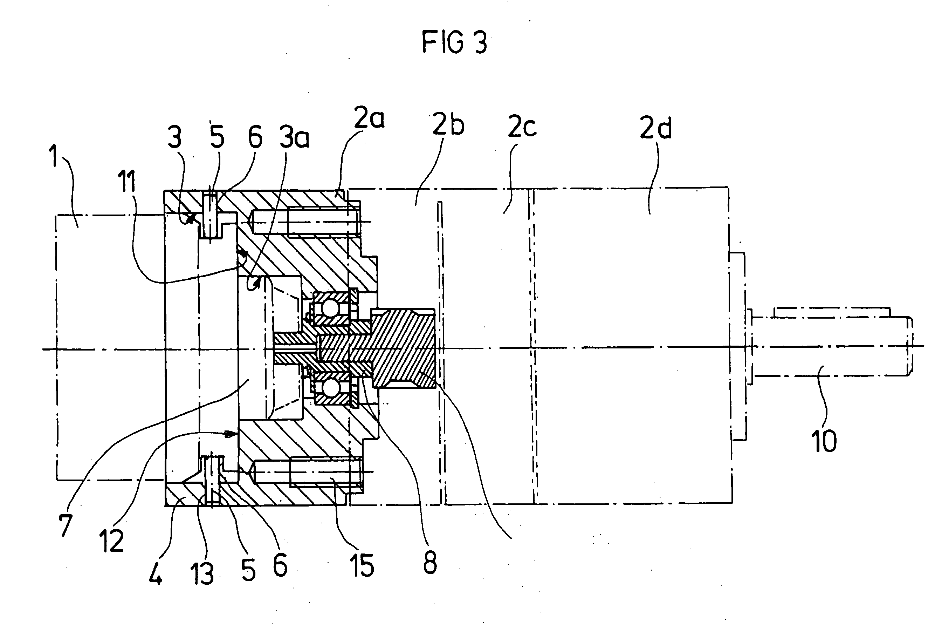

Das erste Gehäuse, nach Figur 1 und 3 bspw. ein Motorgehäuse zur Aufnahme eines Elektromotors wird mit einem zweiten Gehäuse, gemäß den Figuren 1, 2 und 3 als modular aufgebautes Getriebegehäuse 2 ausgebildet, entsprechend der erfindungsgemäßen Verbindungsstruktur verbunden.

Das Motorgehäuse 1 ist zylindrisch ausgebildet und weist abtriebsseitig ein Lagerschild mit einem zylinderförmigen Flansch 7 auf, in dem die Abtriebswelle 9 des Elektromotors gelagert ist.

Das Getriebegehäuse 2 nimmt ein Planetengetriebe auf und umfasst einen Motorflansch 2a, mit dem das Motorgehäuse 1 verbunden wird. Ferner umfasst das Getriebegehäuse zwei Getriebestufen 2b und 2c, die jeweils ein Hohlrad mit Sonnenrad, Planetenräder und Planetenträger (in den Figuren nicht dargestellt) umfassen. Den Abschluss auf der Abtriebsseite des Getriebegehäuses 2 bildet ein Abtriebsflansch 2d mit einer Abtriebswelle 10.

Zur Verbindung des Motorgehäuses 1 mit dem Getriebegehäuse 2 ist der Motorflansch 2a mit einer hohlzylindrischen Aufnahme 3 ausgestattet, die von einem kreisförmigen Kragen 4 auf der Antriebseite des Getriebegehäuses 2 gebildet wird. Der Innendurchmesser der von diesem Kragen 4 gebildeten hohlzylindrischen Aufnahme 3 entspricht dem Außendurchmesser des Motorgehäuses 1 im Bereich dessen Lagerschildes mit dem zylindrischen Flansch 7. Ferner weist diese hohlzylindrische Aufnahme 3 eine zentrische Sackbohrung 3a auf, deren Innendurchmesser dem Außendurchmesser des zylindrischen Flansches 7 des Motorgehäuses 1 entspricht.

Wie die Schnittdarstellung gemäß Figur 3 zeigt, wird das Motorgehäuse 1 mit seinem zylindrischen Flansch 7 in diese Aufnahme 3 gesteckt, wobei der Flansch 7 von der Sackbohrung 3a zur Zentrierung des Getriebegehäuses 1 aufgenommen wird. Die Stirnseite 11 des Motorgehäuses 1 liegt dabei flächenbündig an dem Aufnahmegrund 12 der Aufnahme 3 an.

Zur axialen und radialen Fixierung und Sicherung des Getriebegehäuses 2 an dem Motorgehäuse 1 weist der Getriebeflansch 2a im Bereich des Kragens 4 zwei radial verlaufende Gewindeschrauben 5 als Spannelemente auf, die diametral gegenüberliegend in jeweils einer Gewindebohrung 13 eingeschraubt werden, bis diese in jeweils eine Eingriffsnut 6 auf der Mantelfläche des Motorgehäuses 1 eingreifen und dadurch das Getriebegehäuse 2 gegen das Motorgehäuse 1 verspannt wird.

Der Motorflansch 2a ist mit einer kugelgelagerten Antriebswelle 8 ausgestattet, die als Vierkant mit der Abtriebswelle 9 des Motorgehäuses 1 in Wirkverbindung steht, wobei diese Abtriebswelle 9 ein Hohlwellenprofil mit Innenvierkant aufweist.

Die Erfindung ist natürlich nicht auf diese dargestellte Wirkverbindung beschränkt, sondern es kann jede andere geeignete Wirkverbindung zwischen der Abtriebswelle 9 des Motorgehäuses 1 und der Antriebswelle des Getriebegehäuses 2 wie bspw. eine übliche motorseitige Abtriebswelle mit aufgepressten Motorritzel vorgesehen werden.

Gemäß Figur 3 ist die Antriebswelle 8 des Motorflanschs 2a ihrerseits mit einem Sonnenrad 14 der an den Motorflansch 2a mittels einer Schraubverbindung 15 montierten Getriebestufe 2b drehfest verbunden.

Schließlich können auch andere Spannelement als die im Ausführungsbeispiel dargestellten Gewindestifte 5 verwendet werden; bspw. ist auch der Einsatz eines Sprengringes geeignet.

### Bezugszeichenliste

- 1: erstes Gehäuse, Motorgehäuse
- 2: zweites Gehäuse, Getriebegehäuse
- 2a: Motorflansch des Getriebegehäuses
- 2b: Getriebestufe des Getriebegehäuses 2
- 2c: Getriebestufe des Getriebegehäuses 2
- 2d: Abtriebsflansch des Getriebegehäuses 2
- 3: hohlzylindrische Aufnahme im zweiten Gehäuse 2 bzw. im Motorflansch 2a
- 3a: Sackbohrung in der Aufnahme 3
- 4: ringförmiger Kragen
- 5: Spannelement, Gewindestift
- 6: Eingriffsnut am ersten Gehäuse 1
- 7: zylinderförmiger Flansch des ersten Gehäuses 1
- 8: Antriebswelle des Motorflanschs 2a
- 9: Abtriebswelle des ersten Gehäuses 1

- 10: Abtriebswelle des Getriebegehäuses 2
- 11: Stirnseite des ersten Gehäuses 1
- 12: Aufnahmegrund der Aufnahme 3
- 13: Gewindebohrung für Spannelement 5
- 14: Sonnenrad der Getriebestufe 2b
- 15: Schraubverbindung

## Patentansprüche

1. Verbindungsstruktur zur mechanischen Verbindung eines ersten Gehäuses (1) mit einem zweiten Gehäuse (2), wobei eine Stirnseite des zweiten Gehäuses (2) eine hohlzylindrische Aufnahme (3) zum Einstecken des ersten Gehäuses (1)aufweist, wobei die hohlzylindrische Aufnahme (3) von einem ringförmigen Kragen (4)gebildet wird, und zur Bildung eines Kraftschlusses des ersten Gehäuses (1) mit dem zweiten Gehäuse (2) der Kragen (4) wenigstens ein Spannelement (5) aufweist, das in radialer Richtung hinsichtlich des Kragens (4) mit dem ersten Gehäuse (1) in Wirkverbindung steht, wobei das erste Gehäuse (1) im Bereich des Kragens (4) eine radial angeordnete Eingriffsnut (6) für das Spannelement (5) aufweist,
**dadurch gekennzeichnet, dass** das Spannelement als Gewindestift (5) ausgebildet ist.

2. Verbindungsstruktur nach Anspruch 1,
**dadurch gekennzeichnet, dass** das erste Gehäuse (1) einen zylinderförmigen Flansch (7) aufweist, der von einer auf der einen Stirnseite des zweiten Gehäuses (2) angeordneten Sackbohrung (3a) aufgenommen wird.

3. Verbindungsstruktur nach einem der vorhergehenden Ansprüche,
**dadurch gekennzeichnet, dass** das erste Gehäuse ein Motorgehäuse (1) und das zweite Gehäuse ein Getriebegehäuse (2) ist.

4. Verbindungsstruktur nach Anspruch 3,
**dadurch gekennzeichnet, dass** das Getriebegehäuse (2) modulartig aufgebaut ist, wobei die eine Stirnseite mit dem ringförmigen Kragen (4) und der Zentrieröffnung (3a) als Motorflansch (2a) ausgebildet ist.

5. Verbindungsstruktur nach Anspruch 4,
**dadurch gekennzeichnet, dass** der Motorflansch (2a) eine kugelgelagerte Antriebswelle (8) aufweist, die mit einer von dem zylinderförmigen Flansch (7) des Motorgehäuses (1) geführten Abtriebswelle (9) in Wirkverbindung steht.

6. Verbindungsstruktur nach einem der Ansprüche 3 bis 5,
**dadurch gekennzeichnet, dass** das Getriebegehäuse (2) ein Planetengetriebe umfasst.

7. Verbindungsstruktur nach Anspruch 6,
**dadurch gekennzeichnet, dass** das Getriebegehäuse (2) wenigstens eine Getriebestufe (2b, 2c) mit einem Hohlrad, einem Sonnenrad und einem die Planetenräder tragenden Planetenträger umfasst, wobei die andere Stirnseite des Getriebegehäuses (2) von einem Abtriebsflansch (2d) gebildet wird.

## Claims

1. A connecting structure for the mechanical connection of a first housing (1) to a second housing (2), wherein a front face of the second housing (2) has a hollow cylindrical receiving means (3) for plugging in the first housing (1), wherein the hollow cylindrical receiving means (3) is formed by an annular collar (4), and in order to form a non-positive locking of the first housing (1) to the second housing (2) the collar (4) has at least one tensioning element (5) which is operatively connected to the first housing (1) in the radial direction with respect to the collar (4), wherein the first housing (1) has an engagement groove (6) arranged radially for the tensioning element (5) in the region of the collar (4), **characterized in that** the tensioning element is designed in the form of a threaded pin (5).

2. A connecting structure according to claim 1, **characterized in that** the first housing (1) has a cylindrical flange (7) which is received by a blind bore (3a) arranged on one front face of the second housing (2).

3. A connecting structure according to one of the preceding claims, **characterized in that** the first housing is a motor housing (1) and the second housing is a gear mechanism housing (2).

4. A connecting structure according to claim 3, **characterized in that** the gear mechanism housing (2) is designed in a modular manner, wherein one front face with the annular collar (4) and the centring opening (3a) is formed as a motor flange (2a).

5. A connecting structure according to claim 4, **characterized in that** the motor flange (2a) has a ball-mounted drive shaft (8) which is operatively connected to an output shaft (9) guided by the cylindrical flange (7) of the motor housing (1).

6. A connecting structure according to any one of claims 3 to 5, **characterized in that** the gear mechanism housing (2) embraces a planetary gearing.

7. A connecting structure according to claim 6, **characterized in that** the gear mechanism housing (2) embraces at least one gear step (2b, 2c) with a ring gear, a sun gear and a planet carrier carrying the planet gears, wherein the other front face of the gear mechanism housing (2) is formed by an output flange (2d).

## Revendications

1. Structure de liaison pour permettre la liaison mécanique d'un premier carter (1) et d'un second carter (2), une face frontale du second carter (2) comportant un logement cylindrique creux (3) pour permettre l'enfichage du premier carter (1), le logement cylindrique creux (3) étant formé par une collerette annulaire (4) et pour permettre une liaison par la force du premier carter (1) avec le second carter (2), la collerette (4) comporte au moins un élément de serrage (5) qui est en liaison fonctionnelle avec le premier carter (1) en direction radiale par rapport à la collerette (4), le premier carter (1) comportant dans la zone de la collerette (4) une rainure de mise en prise (6) orientée radialement pour l'élément de serrage (5),
**caractérisée en ce que**
l'élément de serrage est réalisé sous la forme d'une tige filetée (5).

2. Structure de liaison conforme à la revendication 1,
**caractérisée en ce que**
le premier carter (1) comporte une bride (7) en forme de cylindre qui est reçue par un trou borgne (3a) situé sur la face frontale du second carter (2).

3. Structure de liaison conforme à l'une des revendications précédentes,
**caractérisée en ce que**
le premier carter est un carter moteur (1) et le second carter est un carter de boite de vitesses (2).

4. Structure de liaison conforme à la revendication 3,
**caractérisée en ce que**
le carter de boite de vitesse (2) est réalisé de façon modulaire, la face frontale comportant la collerette annulaire (4) et l'ouverture de centrage (3a) étant réalisée sous la forme d'une bride de moteur (2a).

5. Structure de liaison conforme à la revendication 4,
**caractérisée en ce que**
la bride de moteur (2a) comporte un arbre d'entrainement (8) monté sur roulements à billes qui est en liaison fonctionnelle avec un arbre de sortie (9) guidé par la bride cylindrique (7) du carter moteur (1).

6. Structure de liaison conforme à l'une des revendications 3 à 5,
**caractérisée en ce que**
le carter de boite de vitesses (2) renferme une transmission planétaire.

7. Structure de liaison conforme à la revendication 6,
**caractérisée en ce que**
le carter de boite de vitesses (2) comporte au moins un étage de transmission (2b, 2c) comprenant une couronne dentée, une roue solaire et un support planétaire portant les roues planétaires, l'autre face frontale du carter de boite de vitesses (2) étant formé par une bride de sortie (2d).
